# EUROPÄISCHE PATENTSCHRIFT

(11) **EP 3 718 769 B1**
(45) Veröffentlichungstag und Bekanntmachung des Hinweises auf die Patenterteilung: **07.06.2023**
(21) Anmeldenummer: 19166830.0
(22) Anmeldetag: 02.04.2019
(51) Int. Cl.: B32B 21/06, B32B 7/02, B32B 7/12, B32B 21/08, B32B 21/14, B32B 27/18, B32B 29/00, B32B 29/02, B32B 29/06, B32B 33/00, B32B 37/02, B32B 37/10, B32B 38/00, D21H 27/28, E04F 15/02, B82Y 30/00, D06M 15/356, B44C 5/04, E04F 15/10

(54) **HOLZWERKSTOFFPLATTE MIT ANTISTATISCHEN EIGENSCHAFTEN**
COMPOSITE WOOD BOARD WITH ANTISTATIC PROPERTIES
PLAQUE DE MATÉRIAU DÉRIVÉ DU BOIS AUX PROPRIÉTÉS ANTISTATIQUES

(43) Veröffentlichungstag der Anmeldung: 07.10.2020
(73) Patentinhaber: Flooring Technologies Ltd., Kalkara SCM1001 (MT)
(72) Erfinder: Dr. Gier, Andreas, 66399 Mandelbachtal (DE); Dr. Kalwa, Norbert, 32805 Horn-Bad Meinberg (DE)
(74) Vertreter: Maikowski & Ninnemann Patentanwälte Partnerschaft mbB

(56) Entgegenhaltungen:
- EP-A1- 0 276 691
- EP-A1- 2 272 668
- EP-A1- 2 537 653
- EP-A1- 2 927 018
- US-A1- 2005 003 163

## Beschreibung

Die vorliegende Erfindung betrifft eine Holzwerkstoffplatte mit antistatischen Eigenschaften und ein Verfahren zur Herstellung der selbigen.

Bei vielen Gebrauchsgegenständen ist eine wesentliche Voraussetzung, dass bei der Nutzung keine elektrostatische Aufladung erfolgt. Diese ist zum einen unangenehm, da die elektrostatische Ladung zur Entladung über den Nutzer abfließt, zum anderen können dadurch natürlich auch Schäden an elektronischen Bauteilen auftreten. In einigen Bereichen sind Gegenstände, die zu elektrostatischer Aufladung neigen, aus Sicherheitsgründen sogar verboten.

Aus diesen Gründen trachten Hersteller danach entweder für spezielle Anwendungen eine Sonderqualität im Sortiment zu haben oder grundsätzlich alle Produkte in mindestens antistatischer Qualität herzustellen. Dies gilt in besonderem Maß für Fußböden. Dabei haben einige Fußbodenprodukte den generellen Vorteil nicht zu elektrostatischer Aufladung zu neigen (wie Fliesen, Parkett), wohingegen andere Fußböden zu starker Aufladung neigen (wie Teppichböden, Laminatböden).

Im Fall von Laminatböden ist dies insbesondere in Jahreszeiten mit niedrigen Luftfeuchten ein nicht zu unterschätzendes Problem. Dieses Problem wird durch die Verwendung von Holzwerkstoffplatten als Trägermaterialien noch gesteigert, da diese ebenfalls eine schlechte elektrische Leitfähigkeit besitzen. Eine Steigerung der elektrischen Leitfähigkeit von Holzwerkstoffplatten ist zwar durch Zugabe von Salzen bei der Plattenherstellung möglich, führt aber zu Festigkeitsverlusten durch die Störung der Aushärtung der Leime.

Zur Behebung dieses Mangels wurden verschiedene Lösungen angeboten, die aber in vielen Fällen keine nachhaltige Besserung des Problems gebracht haben bzw. vom Nutzer nicht akzeptiert werden.

Eine Lösung des Problems ist die Anhebung der relativen Luftfeuchte durch Befeuchtungsgeräte. Dies ist eine relativ teure Lösung, die den Mangel nur indirekt behebt.

Eine zweite Lösung für das Problem ist die Behandlung der Oberfläche des Laminatbodens mit einem Pflegemittel, das die Oberflächenleitfähigkeit des Laminatbodens anhebt. Diese Lösung hat den Nachteil, dass sich der Effekt mit der Zeit durch das Begehen verringert. Dies bedeutet, dass die Behandlung der Oberfläche in regelmäßigen Abständen wiederholt werden muss. Diese Lösung steht damit ein wenig in Konflikt mit der Tatsache, dass Laminatböden lediglich mit einem nebelfeuchten Tuch gereinigt werden sollten.

Wesentlich nachhaltigere Lösung gehen in die Richtung, in die bei der Herstellung von Laminatböden verwendeten Imprägnate Mittel zur Erhöhung der Leitfähigkeit einzuarbeiten. Dabei tritt aber häufig das Problem auf, dass die entsprechenden Chemikalien nicht besonders gut in den zur Imprägnierung verwendeten Melamin-Formaldehydharzen löslich sind. Zudem verschlechtern diese Mittel häufig, die sehr guten Oberflächeneigenschaften der Laminatböden.

Eine Idee um dieses Problem zu vermeiden ist in der EP 2 537 597 B1 geschildert. Dort wird bei der Herstellung eines Laminatbodens u. a. auf eine Holzwerkstoffplatte oder auf die Unterseite von Imprägnaten abschnittsweise ein Mittel zur Erhöhung der Leitfähigkeit aufgebracht, wobei das Mittel ein mit elektrisch leitenden Partikeln versehener PVAC- Kleber oder PUR-Kleber ist. Diese Verfahrensweise stellt sicher, dass sich kein leitfähigkeitserhöhendes Mittel direkt an der Oberfläche des Laminatbodens befindet und damit eine Verschlechterung der Oberflächeneigenschaften hervorruft.

Aus der US 7,122,585 B2 ist bekannt, Film-bildende Polymerzusammensetzungen mit einem leitfähigen Additiv als Beschichtungspulver auf Holzmaterialien, wie z.B. MDF-Platten aufzubringen. Als leitfähige Additive werden u.a. Kohlenstofffasern, Kohlenstoffnanoröhren, Aktivkohle, metallische Füllstoffe, mit leitfähigen Materialien beschichtete Füllstoffe oder leitfähige Polymere benannt. Das Beschichtungspulver wird mittels elektrostatischer Verfahren auf das Holzmaterial aufgetragen.

Die EP 2 272 668 A1 offenbart eine Holzwerkstoffplatte mit einer Oberflächenschicht umfassend natürliche oder synthetische Fasern, mindestens ein Bindemittel und abriebfeste Partikel auf einem Substrat, dadurch gekennzeichnet, dass die Oberflächenschicht zusätzlich mindestens einen Oberflächenmodifikator für die abriebfesten Partikel umfasst, wobei der mindestens eine Oberflächenmodifikator ein Gemisch von mindestens einer hydrolytisch wirksamen Verbindung und mindestens einer Verbindung der allgemeinen Formel RₙSiX₍₄₋ₙ₎ wobei R ein nicht hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, X

H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl, R und X gleich oder verschieden voneinander sein können, und n = 0,1, 2, 3, insbesondere 0 oder 1 ist, umfasst.

Die bisher bekannten Ansätze sind allerdings aufwendig und teuer. Auch sind die gewünschten Effekte nicht dauerhaft und es wird eine Produktverschlechterung in Kauf genommen.

Der vorliegenden Erfindung lag daher die technische Aufgabe zu Grunde einen Laminatboden herzustellen, der eine gute elektrische Leitfähigkeit besitzt. Dabei soll eine Verschlechterung von Oberflächeneigenschaften vermieden werden. Auch soll die Erhöhung der Leitfähigkeit möglichst niedrige Kosten verursachen. Zudem sollte die Einarbeitung des Mittels in eine Rezeptur problemlos möglich sein. Der Einsatz von toxischen oder umweltproblematischen Mitteln soll in jedem Fall ausgeschlossen sein.

Diese Aufgabe wird erfindungsgemäß durch eine Holzwerkstoffplatte mit antistatischen Eigenschaften mit den Merkmalen des Anspruchs 1 gelöst.

Entsprechend wird eine Holzwerkstoffplatte mit antistatischen Eigenschaften umfassend mindestens eine Trägerplatte und mindestens eine auf mindestens einer Seite der Trägerplatte angeordnete Harzschicht bereitgestellt, wobei die mindestens eine Harzschicht
- kohlenstoffbasierte Partikel, insbesondere Kohlenstoffnanoröhren (CNT) oder Graphen,
- mindestens eine Verbindung mit der allgemeinen Formel (la)

   **R¹ₐSiX₍₄₋ₐ₎** **(Ia),**

   wobei- X H, OH oder ein hydrolysierbarer Rest ausgewählt aus der Gruppe umfassend Halogen, Alkoxy, Carboxy, Amino, Monoalkylamino oder Dialkylamino, Aryloxy, Acyloxy, Alkylcarbonyl ist, R¹ ein organischer Rest ist ausgewählt aus der Gruppe umfassend Alkyl, Aryl, Cycloalkyl, die durch -O- oder -NH- unterbrochen sein können, wobei R¹ mindestens eine funktionelle Gruppe Q¹ aufweist, die ausgewählt ist aus einer Gruppe enthaltend eine Hydroxy-, Amino-, Monoalkylamino-, Carboxy-, Mercapto-, Alkoxy-, Aldehyd-, Acryl-, Acryloxy-, Methacryl-, Methacryloxy-, Cyano-, Isocyano- und Epoxid- Gruppe, a = 1 oder 2 ist, und
- mindestens eine weitere Verbindung der allgemeinen Formel (II)

   **R³_{c}SiX_{(4-c)}** **(II),**

   wobei- X die obige Bedeutung aufweist, R³ ein nicht-hydrolysierbarer organischer Rest R³ ist ausgewählt aus der Gruppe umfassend Alkyl, Aryl, Alkenyl, Alkinyl, Cycloalkyl, Cycloalkenyl, und c = 1, 2, 3, oder 4, insbesondere 1, 2 oder 3 ist, umfasst.

Demnach wird eine Harzschicht als Grundierung auf eine Trägerplatte, insbesondere eine Holzwerkstoffträgerplatte, aufgebracht, wobei diese Grundierungsharzschicht leitfähigkeitserhöhende Mittel enthält. Dieses Mittel wird dem ohnehin verwendeten Grundierungsharz, wie z.B. Melamin-Formaldehyd-Harz zugemischt.

Als besonders geeignete Leitfähigkeitsmittel haben sich kohlenstoffbasierte Partikel, wie Kohlenstoffnanoröhren oder auch Graphen erwiesen. Es hat sich jedoch gezeigt, dass es für eine gute Leitfähigkeit wichtig ist, die Kohlenstoffpartikel ohne Agglomeratbildung in das Harzsystem einarbeiten zu können. Nur somit es gewährleistet auch mit geringen Anteilen an Kohlenstoffpartikeln eine gute elektrische Leitfähigkeit aufzubauen. Hierzu wurden die Kohlenstoffpartikel mit den angeführten Silanverbindungen an ihrer Oberfläche modifiziert. Dies erfüllt zum einen den Zweck, eine Agglomeration zu vermeiden und zum anderen, eine chemische Anbindung zum Melaminharz aufzubauen. Die mit den Silanverbindungen modifizierten Partikel lassen sich problemlos in die zur Imprägnierung verwendeten Harze einarbeiten.

Die sich ergebenen Vorteile sind eine einfache, prozesstechnisch unkomplizierte Lösung, ein langanhaltender Effekt sowie eine relativ geringe Auftragsmenge, wodurch die Gesamtkosten niedrig gehalten werden können.

Kohlenstoffnanoröhren sind große Makromoleküle in Form von Graphitfilmen (ein hexagonales Gitter mit sp²-Konfiguration), die in Form eines Zylinders aufgerollt sind ("singlewalled carbon nanotubes", SWNT). Neben den einwandigen Kohlenstoffnanoröhren sind auch Kohlenstoffnanoröhren mit zwei oder mehreren Wänden bekannt ("double walled carbon nanotubes" DWNT; multi-walled carbon nanotubes", MWNT), wobei letztere in Form eines Zylinders eingebracht in einem weiteren Zylinder beschrieben werden können.

Kohlenstoffnanoröhren zeichnen sich durch eine hohe Festigkeit, ein geringes Gewicht, eine spezifische elektronische Struktur, eine hohe Stabilität und eine hervorragende elektrische aber auch thermische und Leitfähigkeit aus.

Als Kohlenstoffnanoröhren (CNT) können einwandige Kohlenstoffnanoröhren (SWNT), zweiwandige Kohlenstoffnanoröhren (DWNT) oder mehrwandige Kohlenstoffnanoröhren (MWNT) verwendet werden, wobei besonders einwandige Kohlenstoffnanoröhren mit einem Durchmesser zwischen 1,0 - 2,5 nm, bevorzugt zwischen 1,5 und 2,0 nm und einer zwischen Länge 2 - 10 µm, bevorzugt 4- 8 µm, insbesondere bevorzugt 5-6 µm verwendet werden.

Eine mögliche Alternative zur Verwendung von Kohlenstoff-Nanoröhren stellen Nanolagen aus Graphen dar. Graphen ist eine weitere Modifikation des Kohlenstoffes mit einer zweidimensionalen, aromatischen Struktur, in der jedes Kohlenstoffatom von drei weiteren Kohlenstoffatomen umgeben ist, so dass sich hierbei ein wabenförmiges Muster ausbildet.

In einer Ausführungsform beträgt die dem Harz zugegebene Menge an kohlenstoffbasierten Partikeln zwischen 1,0 und 4,0 Gew%, bevorzugt zwischen 1,5 und 3,5 Gew%, besonders bevorzugt zwischen 2,0 und 3,0 Gew%.

Die vorliegend für die Grundierung verwendeten Harzschichten basieren bevorzugt auf wässrigen Formaldehyd-haltigen Harzen, insbesondere Melamin-Formaldehyd-Harz, Harnstoff-Formaldehyd-Harz oder Melamin-Harnstoff-Formaldehyd-Harz. Zusätzliche Polymere sind in dem vorliegend verwendeten Harz nicht enthalten.

Der Feststoffgehalt der die kohlenstoffbasierten Partikel enthaltenden Harzschicht liegt zwischen 50-75 Gew%, bevorzugt 55-70 Gew%, insbesondere bevorzugt bei 60 - 65 Gew%. Die Schichtdicke der die kohlenstoffbasierten Partikel enthaltenden Harzschicht beträgt 10 und 100 µm, bevorzugt zwischen 40 und 80 µm, insbesondere bevorzugt zwischen 45 und 60 µm. Der hydrolysierbare Rest X der Verbindungen der allgemeinen Formel (I), (la) und (II) ist vorteilhafterweise ausgewählt aus einer Gruppe enthaltend H, OH, Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugt ist der Rest X H, OH oder Alkoxy, insbesondere Methoxy, Ethoxy, n-Propoxy oder i-Propoxy.

Der organische Rest R¹ der Verbindung der allgemeinen Formel (Ia) ist bevorzugt ausgewählt aus einer Gruppe umfassend C₁-C₃₀-Alkyl, insbesondere C₅-C₂₅-Alkyl, C₂-C₆-Alkenyl, C₃-C₈-Cycloalkyl und C₃-C₈-Cycloalkenyl. In einer Ausführungsform ist der organische R¹ ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Butadienyl oder Cyclohexadienyl, bevorzugt Methyl, Ethyl, Propyl oder Vinyl.

In einer Ausführungsform ist die mindestens eine funktionelle Gruppe Q¹ der Verbindung der allgemeinen Formel (Ia) ausgewählt aus einer Gruppe enthaltend Epoxid-, Hydroxy-, Ether-, Acryl-, Acryloxy-, Methacryl-, Methacryloxy-, Amino-, Alkoxy-, Cyano- und/oder Isocyano-Gruppe. Die funktionelle Gruppe Q¹ kann demnach vorteilhafterweise einen Rest mit einer Doppelbindung oder einer Epoxid-Gruppe auf, der mittels UV-Strahlung aktivierbar und polymerisierbar ist.

In einer Variante der vorliegenden Zusammensetzung können Verbindungen mit einer funktionellen Gruppe Q1 ausgewählt sein aus Methacryloxypropyltrimethoxysilan (MPTS), Aminoethylaminopropyltrimethoxysilan, Silane mit einer Epoxyfunktionalisierung wie Glycidyloxypropyltriethoxysilan.

Wie beschrieben, kann der Rest R¹ über mindestens eine funktionelle Gruppe Q¹ verfügen. Darüber hinaus kann der Rest R¹ auch mit weiteren Resten substituiert vorliegen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphthyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

In einer weiteren Ausführungsform sind der nicht-hydrolisierbare organische Rest R³ der Verbindung gemäß der Formel (II) ausgewählt aus einer Gruppe umfassend C₁-C₁₅-Alkyl, insbesondere C₁-C₁₀-Alkyl, C₂-C₆-Alkenyl, C₂-C₆-Alkinyl und C₆-C₁₀-Aryl. Diese können nicht-substituiert oder mit einer weiteren hydrophoben Gruppe substituiert sein.

Es ist bevorzugt, wenn der nicht-hydroliserbare organische Rest Rest R³ ausgewählt sind aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Vinyl, 1-Propenyl, 2-Propenyl, Butenyl, Acetylenyl, Propargyl, Phenyl und Naphthyl. Besonders bevorzugt sind Methyl, Ethyl, Propyl, Octyl, oder Phenyl-Reste.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

Die Verbindung der allgemeinen Formel (II) kann insbesondere R³SiX₃ mit R³ als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X als Alkoxy, insbesondere Methoxy, Ethoxy, n-Propoxy oder i-Propoxy, wie z.B. Octyltriethoxysilan, Phenyltriethoxysilan, umfassen.

In einer Variante der vorliegenden Zusammensetzung werden jeweils eine Verbindung der allgemeinen Formel (la) und eine Verbindung der allgemeinen Formel (II) verwendet.

Das (molare) Verhältnis der Silanverbindung der Formel (la) zu der Silanverbindung der Formel (II) liegt bevorzugt zwischen 1 : 0,5 und 1 : 2, insbesondere bevorzugt zwischen 1 : 1 und 1 : 1,5.

In einer besonders bevorzugten Variante der vorliegenden Holzwerkstoffplatte umfasst die Harzschicht Kohlenstoffnanoröhren modifiziert mit Glycidyloxypropylmethyldiethoxysilan, Glycidyloxypropyltriethoxysilan und Octyltriethoxysilan, bevorzugt einer Mischung aus Glycidyloxypropyltriethoxysilan und Octyltriethoxysilan.

In einer weiteren Ausführungsform können der Harzschicht der vorliegenden Holzwerkstoffplatte anorganische Partikel, insbesondere SiO₂, Al₂O₃, ZrO₂, TiO₂-Partikel, enthalten. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Durch die Zugabe der anorganischen Partikel wird der Feststoffgehalt der Zusammensetzung erhöht, wodurch sich das Auftragsverhalten der Zusammensetzung verbessert. Auch wird durch den Zusatz von anorganischen Partikeln eine Schrumpfung und Rissbildung verhindert. Die anorganischen Partikel können in einem Mengenbereich von 0,1 bis 25 Gew%, bevorzugt 5 bis 20 Gew%, bezogen auf den Feststoffgehalt des Silan-Materials (Sol-Gel-Materials), verwendet werden.

Die auf die Holzwerkstoffträgerplatte zur Verbesserung der antistatischen Eigenschaften aufgetragene Harzschicht kann in einem Verfahren umfassend die folgenden Schritte hergestellt werden:
- Bereitstellen von mindestens einer (wässrigen) Harzsuspension;
- Zugabe von mindestens einem Katalysator, insbesondere einer Säure, zu der mindestens einen Harzsuspension;
- Zugabe von mindestens einer Verbindung der allgemeinen Formel (Ia) und mindestens einer Verbindung der allgemeinen Formel (II); und
- Dispergierung der kohlenstoffbasierten Partikel in der Harzsuspension unter Verwendung von Ultraschall (z.B. 160 W) und einem Dispergierwerkzeug (z.B. Ultraturax der Firma IKA mit 15 000 rpm).

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

Zur anschließenden Neutralisierung des Reaktionsgemisches wird bevorzugt eine basische Verbindung, wie z.B. Ammoniak zugegeben. Dies führt zu einer Separation der wässrigen Phase mit dem Binderanteil von der alkoholischen Phase (ethanolischen Phase).

In dem Fall, dass anorganische Partikel der Bindemittelzusammensetzung zugemischt werden, werden die anorganischen Partikel bevorzugt in einer Menge zwischen 0,1 bis 15 Gew%, bevorzugt 0,5 bis 10 Gew%, insbesondere bevorzugt zwischen 1 bis 5 Gew% in verwendet.

In einer weitergehenden Ausführungsform der vorliegenden Holzwerkstoffplatte ist vorgesehen, dass auf der mindestens einen die kohlenstoffbasierte Partikel enthaltenden Harzschicht mindestens eine Lage eines Farbgrundes angeordnet ist.

Die dabei bevorzugt verwendete Farbgrundierungsschicht umfasst eine Zusammensetzung aus Kasein oder Maisprotein als Bindemittel und anorganische Pigmente, insbesondere anorganische Farbpigmente. Als Farbpigmente können in der Grundierungsschicht weiße Pigmente wie Titandioxid verwendet werden oder aber auch weitere Farbpigmente, wie Calciumcarbonat, Bariumsulfat oder Bariumcarbonat. Die Grundierung kann neben den Farbpigmenten und dem Kasein noch Wasser als Lösemittel enthalten. Es ist ebenfalls bevorzugt, wenn die aufgetragene pigmentierte Grundschicht aus mindestens einer, bevorzugt aus mindestens zwei, insbesondere bevorzugt aus mindestens vier oder fünf nacheinander aufgetragenen Lagen bzw. Aufträgen besteht, wobei die Auftragsmenge zwischen den Lagen bzw. Aufträgen gleich oder verschieden sein kann.

In einer anderen Ausführungsform der vorliegenden Holzwerkstoffplatte ist auf der mindestens einen Harzschicht mit den modifizierten Kohlenstoffpartikeln und der mindestens einen Farbgrundschicht mindestens eine Primerschicht vorgesehen ist.

Die Menge des aufgetragenen flüssigen Primers beträgt vorliegend zwischen 1 und 30 g/m², bevorzugt zwischen 5 und 20 g/m², insbesondere bevorzugt zwischen 10 und 15 g/m². Als Primer werden bevorzugt Verbindungen auf Isocyanatbasis, wobei nicht-aromatische, aliphatische Isocyanate, wie Hexamethylendiisocyanat, Isophorondiisocyanat, oder Präpolymere, die diese Isocyanate enthalten besonders bevorzugt sind.

In einer Ausführungsform der vorliegenden Holzwerkstoffplatte ist auf der mindestens einen Primerschicht mindestens eine Dekorschicht aufgebracht.

Die Dekorschicht kann mittels Direktdruck aufgetragen werden. Im Falle eines Direktdruckes erfolgt der Auftrag einer wasserbasierten, pigmentierten Druckfarbe im Tiefdruck- oder im Digitaldruckverfahren, wobei die wasserbasierte pigmentierte Druckfarbe in mehr als einer Schicht auftragbar ist, z.B. in Form von zwei bis zehn Schichten, bevorzugt drei bis acht Schichten.

Im Falle des Direktdrucks erfolgt der Auftrag der mindestens einen Dekorschicht wie erwähnt mittels eines analogen Tiefdruck- und/oder eines Digitaldruckverfahrens. Das Tiefdruckverfahren ist eine Drucktechnik, bei der die abzubildenden Elemente als Vertiefungen einer Druckform vorliegen, die vor dem Druck eingefärbt wird. Die Druckfarbe befindet sich vornehmlich in den Vertiefungen und wird aufgrund des Anpressdruckes der Druckform und von Adhäsionskräften auf den zu bedruckenden Gegenstand, wie z.B. eine Holzfaserträgerplatte, übertragen. Hingegen wird beim Digitaldruck das Druckbild direkt von einem Computer in eine Druckmaschine, wie z.B. einen Laserdrucker oder Tintenstrahldrucker übertragen. Dabei entfällt die Verwendung einer statischen Druckform. In beiden Verfahren ist die Verwendung von wässrigen Farben und Tinten oder farbgebender Mittel auf UV-Basis möglich. Ebenfalls ist es vorstellbar, die genannten Drucktechniken aus Tief- und Digitaldruck zu kombinieren. Eine geeignete Kombination der Drucktechniken kann zum einen unmittelbar auf der Trägerplatte bzw. der zu bedruckenden Schicht erfolgen oder auch vor dem Drucken durch Anpassung der verwendeten elektronischen Datensätze.

In einer weitergehenden Ausführungsform der vorliegenden Holzwerkstoffplatte ist auf der Dekorschicht mindestens eine Harzschutzschicht vorgesehen.

Diese Harzschutzschicht basiert ebenfalls auf wässrigen Formaldehyd-haltigen Harzen, insbesondere Melamin-Formaldehyd-Harz, Harnstoff-Formaldehyd-Harz oder Melamin-Harnstoff-Formaldehyd-Harz.

Der Feststoffgehalt der Harzschutzschicht liegt zwischen 60 und 80 Gew%, bevorzugt 65 und 70 Gew%, insbesondere bevorzugt zwischen 65 und 67 Gew%. Die Menge der auf die Dekorschicht aufgetragenen Harzschutzschicht kann zwischen 10-50 g/m², bevorzugt 20-30 g/m², insbesondere bevorzugt 25 g/m² betragen.

In einer besonders bevorzugten Ausführungsform enthält die Harzschutzschicht Glaskugeln, die als Abstandshalter fungieren. Die bevorzugt verwendeten Glaskugeln weisen einen Durchmesser von 90-150 µm auf. Die Glaskugeln können zusammen mit der Harzschutzschicht aufgebracht werden oder separat auf die Harzschutzschicht aufgestreut werden. Die Menge an Glaskugeln beträgt 10 bis 50 g/m², bevorzugt 10 bis 30 g/m², insbesondere bevorzugt 15 bis 25 g/m² bzw. zwischen 10 und 30 Gew%, bevorzugt zwischen 15 und 25 Gew%, insbesondere bevorzugt 20 Gew%. Der Ansatz besteht bevorzugt aus ca. 40 kg Harz flüssig plus Glaskugeln und Hilfsstoffe. Die Glasperlen können ebenfalls in silanisierter Form vorliegen. Durch die Silanisierung der Glasperlen wird die Einbettung der Glasperlen in die Harzmatrix verbessert.

Auf die Harzschutzschicht auf der Oberseite der Holzwerkstoffplatte kann ein harzimprägniertes Overlay-Papier aufgelegt werden. Parallel zum Overlaypapier kann auf der Unterseite der Holzwerkstoffplatte ein Gegenzugpapier vorgesehen werden. Der gesamte Schichtaufbau ist abschließend z.B. unter Verwendung einer Kurztaktpresse verpresst.

In einer weiteren Ausführungsform der vorliegenden Holzwerkstoffplatte ist vorgesehen, dass auf der Harzschutzschicht - anstatt des Overlay-Papieres - mindestens eine Lage einer weiteren, zweiten Harzschicht, insbesondere wässrigen Formaldehyd-haltigen Harzschicht, aufgetragen ist. Der Feststoffgehalt der weiteren, zweiten Harzschicht liegt zwischen 60 und 80 Gew%, bevorzugt 65 und 70 Gew%, insbesondere bevorzugt zwischen 65 und 67 Gew%. Die Menge aufgetragenen Harzschicht kann zwischen 10-50 g/m², bevorzugt 20-30 g/m², insbesondere bevorzugt 25 g/m² betragen.

In einer weiteren Ausführungsform kann parallel zur weiteren, zweiten Harzschicht auf der Oberseite der Holzwerkstoffplatte auch eine Harzschicht auf die Unterseite der Holzwerkstoffplatte aufgetragen (jedoch ohne Glaskugeln). Die Menge der auf die Unterseite der Holzwerkstoffplatte aufgetragenen Harzschicht kann zwischen 50-100 g/m², bevorzugt 60-80 g/m², insbesondere bevorzugt 60 g/m² betragen. Bevorzugt ist die untere Harzschicht (z.B. bräunlich) eingefärbt, um einen Gegenzug zu simulieren.

Die auf der Unterseite aufgetragene(n) Harzschicht(en) wirken als Gegenzug. Durch das Aufbringen der Harzschichten auf die Oberseite und Unterseite der Holzwerkstoffplatten in ungefähr den gleichen Mengen wird gewährleistet, dass die durch die aufgebrachten Schichten beim Verpressen entstehenden Zugkräfte auf die Holzwerkstoffplatte sich gegenseitig aufheben. Der auf die Unterseite aufgebrachte Gegenzug entspricht im Schichtaufbau und der jeweiligen Schichtdicke ungefähr der auf der Oberseite aufgebrachten Schichtfolge mit dem Unterschied der Glaskugeln.

In einer weiteren Ausführungsvariante der vorliegenden Holzwerkstoffplatte ist auf die weitere zweite Harzschicht auf der Oberseite der Holzwerkstoffplatte mindestens eine Lage von abriebfesten Partikeln eingebracht.

Als abriebfeste Partikel werden bevorzugt Partikel aus Korund (Aluminiumoxide), Borcarbide, Siliziumdioxide, Siliziumcarbide verwendet. Besonders bevorzugt sind Korundpartikel. Dabei handelt es sich in bevorzugter Weise um Edelkorund weiß mit einer hohen Transparenz, damit die optische Wirkung des darunterliegenden Dekors so wenig wie möglich nachteilig beeinflusst wird. Korund weist eine ungleichmäßige Raumform auf.

Die Menge an aufgestreuten abriebfesten Partikeln beträgt 10 bis 50 g/m², bevorzugt 20 bis 40 g/m², insbesondere bevorzugt 25 bis 30 g/m². Die Menge der aufgestreuten abriebfesten Partikel hängt von der zu erreichenden Abriebklasse ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 25 g/m².

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA Norm). In einer Variante werden als abriebfeste Partikel Edelkorund weiß F180 bis F240, bevorzugt in einem Hauptkornbereich von 53-90 µm verwendet. In einer besonders bevorzugten Ausführungsform werden Korundpartikel der Klasse F200 verwendet, wobei F200 eine Mischung zwischen F180 und F220 ist und einen Durchmesser zwischen 53 und 75 µm aufweist.

Die abriebfesten Partikel dürfen nicht zu feinkörnig sein (Gefahr der Staubbildung), aber auch nicht zu grobkörnig sein. Die Größe der abriebfesten Partikel stellt somit ein Kompromiss dar.

In einer weitergehenden Ausführungsform können silanisierte Korundpartikel verwendet werden. Typische Silanisierungsmittel sind Aminosilane.

In einer weiteren Ausführungsform des vorliegenden Verfahrens sind auf der mindestens einen aufgestreuten Lage aus abriebfesten Partikeln mindestens eine weitere Lage einer dritten Harzschicht, bevorzugt bis zu drei oder vier Lagen einer Harzschicht, auf der Oberseite der Holzwerkstoffplatte vorgesehen. Auch diese Harzschicht basiert auf einem Formaldehyd-haltigen Harz mit einem zwischen 60 und 80 Gew%, bevorzugt 65 und 70 Gew%, insbesondere bevorzugt zwischen 65 und 67 Gew%. Die Menge einer Lage der aufgetragenen Harzschicht kann zwischen 10-50 g/m², bevorzugt 20-30 g/m², insbesondere bevorzugt 25 g/m² betragen.

Es ist weiterhin bevorzugt, dass die diese weitere Harzschicht Glaskugeln und/oder Fasern, insbesondere Holzfasern oder Zellulosefasern, umfassen. Besonders bevorzugt ist die Verwendung von Glaskugeln in mindestens einer der Lagen (z.B. 20 Gew% an Glaskugeln).

Parallel zu dieser weiteren, dritten Harzschicht auf der Oberseite der vorliegenden Holzwerkstoffplatte kann auf der Unterseite der Holzwerkstoffplatte ebenfalls eine weitere Harzschicht (jedoch ohne Glaskugeln) vorgesehen sein. Bevorzugt ist die untere Harzschicht (z.B. bräunlich) eingefärbt, um einen Gegenzug zu simulieren.

Es ist noch anzumerken, dass zu sämtlichen Harzschichten jeweils Additive, wie Härter, Netzmittel, Entschäumer, Trennmittel und/oder weitere Komponenten zugegeben werden können.

Auf diesem mehrlagigen Schichtaufbau kann abschließend eine weitere Overlaylage vorgesehen sein, die mit einem Gegenzugpapier in einer Kurztaktpresse verpresst wird.

Als Trägerplatten können Holzfaserplatten, wie HDF. MDF, Holspanplatten oder Holzfaser-Kunststoffplatten, wie WPC-Platten verwendet werden.

In einer Ausführungsform weist die vorliegende Holzwerkstoffplatte folgendem Schichtaufbau auf (von unten nach oben gesehen): Gegenzug aus Gegenzugpapier - Holzwerkstoffträgerplatte - farblose Grundierungsschicht mit Silanmodifizierten Kohlenstoffpartikeln - Farbgrund - Primerschicht - Druckdekorschicht - Harzschutzschicht mit Glaskugeln - ggf. Overlaylage.

In einer weiteren Ausführungsform weist die vorliegende Holzwerkstoffplatte folgendem Schichtaufbau auf (von unten nach oben gesehen): Gegenzug aus Gegenzugpapier - Gegenzug aus mehreren Lagen einer Harzschicht - Holzwerkstoffträgerplatte - farblose Grundierungsschicht mit Silan-modifizierten Kohlenstoffpartikeln - Farbgrund - Primerschicht - Druckdekorschicht - Harzschutzschicht mit Glaskugeln - Harzschicht - Lage von abriebfesten Partikeln - mehrere Lagen einer Harzschicht (mit Glaskugeln in mindestens einer Lage).

Die Aufgabe der vorliegenden Erfindung wird auch mit einem Verfahren zur Herstellung der beschriebenen Holzwerkstoffplatte gelöst.

Entsprechend wird ein Verfahren zur Herstellung einer Holzwerkstoffplatte mit antistatischen Eigenschaften bereitgestellt, welches die folgenden Schritte umfasst:
- Bereitstellen einer Harzsuspension enthaltend kohlenstoffbasierte Partikel, mindestens eine Verbindung der allgemeinen Formel (Ia) und mindestens eine Verbindung der allgemeinen Formel (II);
- Auftragen der Harzsuspension als Harzschicht auf die Oberseite der Trägerplatte;
- Auftragen von mindestens einer Lage einer Farbgrundschicht;
- Auftragen von mindestens einer Primerschicht;
- Auftragen von mindestens einer Dekorschicht;
- Auftragen von mindestens einer Harzschutzschicht,
- ggf. Auflegen eines Gegenzugpapiers auf die Unterseite der Trägerplatte; und
- Verpressen des Schichtaufbaus.

In einer Ausführungsform umfasst das Verfahren die folgenden zusätzlichen Schritte (vor dem Verpressen):
- Auftragen von mindestens einer zweiten Harzschicht auf die mindestens eine Harzschutzschicht auf der Oberseite der Trägerplatte und ggfs. paralleles Auftragen einer Harzschicht auf die Unterseite der Trägerplatte als Gegenzug;
- Aufstreuen von mindestens einer Lage aus abriebfesten Partikeln auf die Oberseite der Trägerplatte;
- Auftragen von mindestens einer Lage einer weiteren Harzschicht auf die Lage aus abriebfesten Partikeln auf der Oberseite der Trägerplatte und ggfs. paralleles Auftragen einer Lage einer weiteren Harzschicht auf die Unterseite der Trägerplatte als Gegenzug,
- ggf. Auflegen eines Gegenzugpapiers auf die Unterseite der Trägerplatte; und
- Verpressen des Schichtaufbaus.

In einer bevorzugten Ausführungsform umfasst eine Produktionslinie zur Durchführung des vorliegenden Verfahrens folgende Elemente:
- mindestens eine erste Auftragsvorrichtung zum Auftragen einer Auftragen der Harzsuspension enthaltend kohlenstoffbasierte Partikel, mindestens eine Verbindung der allgemeinen Formel (Ia) und mindestens eine Verbindung der allgemeinen Formel (II) auf die Oberseite der Trägerplatte;
- mindestens eine zweite Auftragsvorrichtung zum Auftragen einer Farbgrundschicht;
- mindestens eine dritte Auftragsvorrichtung zum Auftragen von mindestens einer Primerschicht;
- mindestens eine Druckvorrichtung zum Auftragen von mindestens einer Dekorschicht;
- mindestens eine vierte Auftragsvorrichtung zum Auftragen von mindestens einer Harzschutzschicht,
- ggf. eine Vorrichtung zum Auflegen eines Overlay-Papiers auf die Oberseite und eine Gegenzugpapiers auf die Unterseite der Trägerplatte; und
- mindestens eine Kurztaktpresse.

In einer weiteren Ausführungsform umfasst die Produktionslinie noch folgende weitere Elemente:
- mindestens eine fünfte Auftragsvorrichtung zum Auftragen von mindestens einer zweiten Harzschicht auf die mindestens eine Harzschutzschicht auf der Oberseite der Trägerplatte und ggfs. paralleles Auftragen einer Harzschicht auf die Unterseite der Trägerplatte als Gegenzug;
- mindestens eine Vorrichtung zum Aufstreuen von mindestens einer Lage aus abriebfesten Partikeln auf die Oberseite der Trägerplatte;
- mindestens eine sechste Auftragsvorrichtung zum Auftragen von mindestens einer Lage einer weiteren Harzschicht auf die Lage aus abriebfesten Partikeln auf der Oberseite der Trägerplatte und ggfs. paralleles Auftragen einer Lage einer weiteren Harzschicht auf die Unterseite der Trägerplatte als Gegenzug,

Die Auftragsvorrichtungen für die Harzschichten sind entweder einfache, einseitige Auftragswerke zum Auftragen der farblosen Grundierungsschicht, des Farbgrundes, der Primerschicht und der Harzschutzschicht, oder Doppelauftragswerke zum parallelen Aufbringen der weiteren Harzschichten auf Oberseite und Unterseite (als Gegenzug) der Trägerplatte, wobei hinter jedem Auftragswerk mindestens eine Trocknungsvorrichtung zum Trocknen der oberen und/oder unteren aufgetragenen Schichten vorgesehen ist.

Die zum Streuen der abriebfesten Partikel vorgesehene Streuvorrichtung ist geeignet zum Streuen von Pulver, Granula, Fasern und umfasst ein oszillierendes Bürstensystem. Die Streuvorrichtung besteht im Wesentlichen aus einem Vorratstrichter, einer sich drehenden, strukturierten Walze und einem Abstreifer. Dabei wird über die Drehgeschwindigkeit der Walze die Auftragsmenge an abriebfesten Material bestimmt. Die Streuvorrichtung umfasst bevorzugt eine Stachelwalze.

Die Erfindung wird nachfolgend unter Bezugnahme auf die Figuren der Zeichnung anhand von Ausführungsbeispielen näher erläutert.
- Figur 1: eine schematische Darstellung einer erfindungsgemäßen Holzwerkstoffplatte gemäß einer ersten Ausführungsform; und
- Figur 2: eine schematische Darstellung einer erfindungsgemäßen Holzwerkstoffplatte gemäß einer zweiten Ausführungsform.

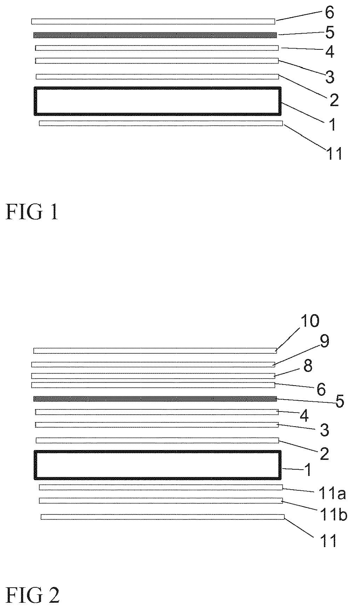

Figur 1 zeigt den Querschnitt einer ersten Ausführungsform der vorliegenden Holzwerkstoffplatte mit dem folgendem Schichtaufbau auf (von unten nach oben gesehen): Gegenzug aus Gegenzugpapier 11 - Holzwerkstoffträgerplatte 1 - farblose Grundierungsschicht mit silanmodifizierten Kohlenstoffpartikeln 2 - Farbgrund 3 - Primerschicht 4 - Druckdekorschicht 5 - Harzschutzschicht mit Glaskugeln 6 - optionale Overlaylage 7 (nicht gezeigt).

Figur 2 zeigt den Querschnitt einer zweiten Ausführungsform der vorliegenden Holzwerkstoffplatte mit dem folgendem Schichtaufbau (von unten nach oben gesehen): Gegenzug aus Gegenzugpapier 11 - Gegenzug aus mehreren Lagen einer Harzschicht 11a, 11b- Holzwerkstoffträgerplatte 1 - farblose Grundierungsschicht mit silanmodifizierten Kohlenstoffpartikeln 2 - Farbgrund 3 - Primerschicht 4 - Druckdekorschicht 5-Harzschutzschicht mit Glaskugeln 6 - Harzschicht 8 - Lage von abriebfesten Partikeln 9 - mehrere Lagen einer Harzschicht (mit Glaskugeln in mindestens einer Lage) 10.

### Ausführungsbeispiel 1: Herstellen einer ersten mit modifizierten Kohlenstoffpartikeln versetzten Harzsuspension

Zur Modifikation wird 90 g (bzw. 80 g) Melamin-Formaldehyd Harz und 8,5 g (bzw. 17 g) Wasser vorgelegt und anschließend 0,08 g (bzw. 0,16 g) para-Toluolsulfonsäure. Zu dieser wässrigen Lösung werden 0.7 g (bzw. 1,4 g Gylcidyloxypropyltriethoxysilan sowie 0,16 g (bzw. 0,32g) Ocytyltriethoxysilan hinzugegeben.

Anschließend werden 1,5 g (bzw. 3 g) CNTs unter Verwendung von Ultraschall und hohen Scherkräften (Ultraturray mit 15 000 rpm) in die Lösung dispergiert und bei 40 °C für 30 Minuten gerührt. Diese Lösung kann nun wie ein normales Harzsystem verarbeitet werden. (In Klammer stehen die Angaben für das Muster mit 3 % CNT im Harz)

### Ausführungsbeispiel 2: Herstellen einer zweiten mit modifizierten Kohlenstoffpartikeln versetzten Harzsuspension

Zur Modifikation wird 98,5 g Wasser vorgelegt und anschließend 0,08 g para-Toluolsulfonsäure. Zu dieser wässrigen Lösung werden 0.7 g Gylcidyloxypropyltriethoxysilan sowie 0,16 g Ocytyltriethoxysilan hinzugegeben.

Anschließend werden 1,5 CNTs unter Verwendung von Ultraschall und hohen Scherkräften (Ultraturray mit 15 000 rpm) in die Lösung dispergiert und bei 40 °C für 30 Minuten gerührt. Diese rein wässrige Lösung kann nun zu Melaminharz direkt an der Auftragsmaschine zudosiert werden.

### Ausführungsbeispiel 3: Herstellen einer ersten Holzwerkstoffplatte gemäß Figur 1

Auf eine HDF (8 mm) wird mit einer Walze ein Melaminharz als farblose Grundierung aufgebracht, dass 1,5 Gew% Kohlenstoff-Nanoröhrchen enthält. Die Nanoröhren hatten eine Länge von ca. 5 µm und einen Durchmesser von 1,2 bis 2,0 nm. Der Feststoffgehalt der Flotte lag bei ca. 60 Gew%. In dem Melaminharz waren die üblichen Hilfsstoffe (Härter, Entschäumer, Netzmittel usw.) enthalten. Das Melaminharz wird in einem Umlufttrockner auf eine Feuchte von 10 bis 15 % getrocknet.

Danach wird auf die farblose Grundierung ein Farbgrund aufgebracht. Diese besteht aus Titandioxid und Casein als Bindemittel. Dabei wird alternierend eine Menge von ca. 5 g Farbgrund/m² aufgetragen mit anschließender Zwischentrocknung in einem Umluftrockner. Dies wird bis zu fünfmal wiederholt.

Danach wird ein Primer in einer Menge von ca. 10 g/m² flüssig aufgetragen und getrocknet (Umlufttrockner). Anschließend wird entweder im indirekten Tief- oder im Digitaldruck ein Dekor aufgebracht. Es erfolgt wieder eine Trocknung im Umlufttrockner.

Daran schließt sich der Auftrag einer Schutzschicht bestehend aus Melaminharz (65 Gew%, mit den üblichen Hilfsstoffen) und Glaskugeln (Durchmesser: ca. 90 µm, ca. 20 Gew%) an. Auch hier erfolgt eine Trocknung im Umlufttrockner.

Die beschichteten HDF werden anschließend an einer Kurztaktpresse mit einem Gegenzug- und einem korundhaltigem Overlay-Imprägnat bei hohem Druck (50 kp/cm²) und hoher Temperatur (200°C) ca. 10 sec verpresst. Nach dem Abkühlen und einer anschließenden Klimatisierung (50 % rel. LF, 23 °C) wurde an dem Muster der Oberflächenwiderstand gemäß der DIN EN 1081: 2018 bestimmt. Dabei ergab sich ein Wert von 1.0 × 10⁹ Ω. Bei einer Nullprobe ohne Kohlenstoff-Nanoröhrchen wurde ein Wert von 5 × 10¹² Ω gefunden. Bei der Prüfung verschiedener Oberflächeneigenschaften (Verhalten gegenüber Wasserdampf, Oberflächenaushärtung mittels Säuretest) konnten keine Auffälligkeiten festgestellt werden.

### Ausführungsbeispiel 4: Herstellen einer zweiten Holzwerkstoffplatte gemäß Figur 2

Auf eine HDF (8 mm) wird mit einer Walze ein Melaminharz als farblose Grundierung aufgebracht, dass ca. 3 Gew% Kohlenstoffnanoröhrchen enthält. Der Feststoffgehalt der Flotte lag bei ca. 60 Gew%. In dem Melaminharz waren die üblichen Hilfsstoffe (Härter, Entschäumer, Netzmittel usw.) enthalten. Das Melaminharz wird in einem Umlufttrockner auf eine Feuchte von 10 bis 15 % getrocknet.

Danach wird auf die farblose Grundierung ein Farbgrund aufgebracht. Diese besteht aus Titandioxid und Casein als Bindemittel. Dabei wird alternierend eine Menge von ca. 5 g Farbgrund/m² aufgetragen mit anschließender Zwischentrocknung in einem Umluftrockner. Dies wird bis zu fünfmal wiederholt.

Danach wird ein Primer in einer Menge von ca. 10 g/m² flüssig aufgetragen und getrocknet (Umlufttrockner). Anschließend wird entweder im indirekten Tief- oder im Digitaldruck ein Dekor aufgebracht. Es erfolgt wieder eine Trocknung im Umlufttrockner. Daran schließt sich der Auftrag einer Schutzschicht bestehend aus Melaminharz (65 Gew%, mit den üblichen Hilfsstoffen) und Glaskugeln (Durchmesser: ca. 90 µm, ca. 20 Gew%) an. Auch hier erfolgt eine Trocknung im Umlufttrockner.

Danach wurden die Platten in einer Beschichtungslinie zunächst auf der bedruckten Oberseite in einem Walzenauftragsaggregat mit ca. 50 g Melaminharz (ca. 65 Gew% mit den entsprechenden Hilfsstoffen) beschichtet. Gleichzeitig wurde in etwa die gleiche Menge Melaminharz ( ca. 65 Gew% mit den entsprechenden Hilfsstoffen und braun eingefärbt) auf der Unterseite der Platte aufgetragen.

Danach wird auf die Oberseite mit einem Streuapparat (Fa. Sandvik) ca. 20 g Korund/m² (F 200) aufgestreut. Das Melaminharz wird in einem Umlufttrockner getrocknet. Dann werden noch dreimal je 20 g Melaminharz (ca. 65 Gew% mit den entsprechenden Hilfsstoffen und ca. 20 Gew% Glaskugeln) aufgetragen und im Umluftrockner zwischengetrocknet. Gleiches erfolgt mit dem eingefärbten Melaminharz ohne Glaskugeln.

Die beschichtete HDF werden anschließend an einer Kurztaktpresse mit einem Gegenzug und einem Overlay bei hohem Druck (50 kp/cm²) und hoher Temperatur (200°C) ca. 10 sec verpresst. Nach dem Abkühlen und einer anschließenden Klimatisierung (50 % rel. LF, 23 °C) wurden an einem Muster ein Oberflächenwiderstand gemäß der DIN EN 1081: 2018 bestimmt. Dabei ergab sich ein Wert von 9,0 × 10⁸ Ω. Bei einer Nullprobe wurde ein Wert von 3 × 10¹² Ω gefunden. Bei der Prüfung verschiedener Oberflächeneigenschaften (Verhalten gegenüber Wasserdampf, Oberflächenaushärtung mittels Säuretest) konnten keine Auffälligkeiten festgestellt werden.

## Patentansprüche

1. Holzwerkstoffplatte mit antistatischen Eigenschaften umfassend mindestens eine Trägerplatte (1) und mindestens eine auf mindestens einer Seite der Trägerplatte angeordnete Harzschicht (2), **dadurch gekennzeichnet, dass** die mindestens eine Harzschicht (2)
- kohlenstoffbasierte Partikel, insbesondere Kohlenstoffnanoröhren (CNT) oder Graphen,
- mindestens eine Verbindung mit der allgemeinen Formel (la)
**R¹ₐSiX₍₄₋ₐ₎** **(Ia),**
wobei
- X H, OH oder ein hydrolysierbarer Rest ausgewählt aus der Gruppe umfassend Halogen, Alkoxy, Carboxy, Amino, Monoalkylamino oder Dialkylamino, Aryloxy, Acyloxy, Alkylcarbonyl ist,
- R¹ ein organischer Rest ist ausgewählt aus der Gruppe umfassend Alkyl, Aryl, Cycloalkyl, die durch -O- oder -NH- unterbrochen sein können,
- wobei R¹ mindestens eine funktionelle Gruppe Q¹ aufweist, die ausgewählt ist aus einer Gruppe enthaltend eine Hydroxy-, Amino-, Monoalkylamino-, Carboxy-, Mercapto-, Alkoxy-, Aldehyd-, Acryl-, Acryloxy-, Methacryl-, Methacryloxy-, Cyano-, Isocyano- und Epoxid- Gruppe,
- a = 1 oder 2 ist, und
- mindestens eine weitere Verbindung der allgemeinen Formel (II)
**R³_{c}SiX_{(4-c)}** **(II),**
wobei
- X die obige Bedeutung aufweist,
- R³ ein nicht-hydrolysierbarer organischer Rest R³ ist ausgewählt aus der Gruppe umfassend Alkyl, Aryl, Alkenyl, Alkinyl, Cycloalkyl, Cycloalkenyl, und
- c 1, 2, 3, oder 4, insbesondere 1, 2 oder 3 ist,
umfasst.

2. Holzwerkstoffplatte nach Anspruch 1, **dadurch gekennzeichnet, dass** jeweils eine Verbindung der allgemeinen Formel (la) und eine Verbindung der allgemeinen Formel (II) verwendet werden.

3. Holzwerkstoffplatte nach Anspruch 2, **dadurch gekennzeichnet, dass** das molare Verhältnis der Silanverbindung der Formel (la) zu der Silanverbindung der Formel (II) zwischen 1 : 0,5 und 1 : 2, bevorzugt zwischen 1 : 1 und 1 : 1,5 liegt.

4. Holzwerkstoffplatte nach einem der vorhergehenden Ansprüche, **dadurch gekennzeichnet, dass** X ausgewählt ist aus einer Gruppe enthaltend H, OH, Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆.

5. Holzwerkstoffplatte nach einem der vorhergehenden Ansprüche, **dadurch gekennzeichnet, dass** R¹ ausgewählt ist ausgewählt aus einer Gruppe umfassend C₁-C₃₀-Alkyl, insbesondere C₅-C₂₅-Alkyl, C₂-C₆-Alkenyl, C₃-C₈-Cycloalkyl und C₃-C₈-Cycloalkenyl.

6. Holzwerkstoffplatte nach einem der vorhergehenden Ansprüche, **dadurch gekennzeichnet, dass** die mindestens eine funktionelle Gruppe Q¹ ausgewählt ist aus einer Gruppe enthaltend Epoxid-, Hydroxy-, Acryl-, Acryloxy-, Methacryl-, Methacryloxy-, Amino-, Alkoxy-, Cyano- und/oder Isocyano-Gruppe.

7. Holzwerkstoffplatte nach einem der vorhergehenden Ansprüche, **dadurch gekennzeichnet, dass** der nicht-hydrolysierbare organische Rest R³ ausgewählt ist aus einer Gruppe umfassend C₁-C₁₅-Alkyl, insbesondere C₁-C₁₀-Alkyl, C₂-C₆-Alkenyl, C₂-C₆-Alkinyl und C₆-C₁₀-Aryl.

8. Holzwerkstoffplatte nach einem der vorhergehenden Ansprüche, **dadurch gekennzeichnet, dass** auf der mindestens einen kohlenstoffbasierte Partikel enthaltenden Harzschicht (2) mindestens eine Lage eines Farbgrundes (3) vorgesehen ist.

9. Holzwerkstoffplatte nach Anspruch 8, **dadurch gekennzeichnet, dass** auf der mindestens einen Harzschicht (2) und der mindestens einen Farbgrundschicht (3) mindestens eine Primerschicht (4) vorgesehen ist.

10. Holzwerkstoffplatte nach einem der vorhergehenden Ansprüche, **gekennzeichnet durch** mindestens eine Dekorschicht (5).

11. Holzwerkstoffplatte nach Anspruch 10, **gekennzeichnet durch** mindestens eine auf der Dekorschicht (5) vorgesehene Harzschutzschicht (6).

12. Holzwerkstoffplatte nach Anspruch 11, **dadurch gekennzeichnet, dass** auf der Harzschutzschicht (6) eine zweite Harzschicht (8) aufgetragen ist.

13. Holzwerkstoffplatte nach Anspruch 12, **dadurch gekennzeichnet, dass** auf die zweite Harzschicht (8) auf der Oberseite der Holzwerkstoffplatte mindestens eine Lage von abriebfesten Partikeln (9) eingebracht ist, und auf der Lage aus abriebfesten Partikeln (9) bevorzugt mindestens eine Lage einer weiteren Harzschicht (10) vorgesehen ist.

14. Verfahren zur Herstellung einer Holzwerkstoffplatte nach einem der vorhergehenden Ansprüche, umfassend die Schritte:
- Bereitstellen einer Harzsuspension enthaltend kohlenstoffbasierte Partikel, mindestens eine Verbindung der allgemeinen Formel (Ia) und mindestens eine Verbindung der allgemeinen Formel (II);
- Auftragen der Harzsuspension als Harzschicht (2) auf die Oberseite der Trägerplatte (1);
- Auftragen von mindestens einer Lage einer Farbgrundschicht (3);
- Auftragen von mindestens einer Primerschicht (4);
- Auftragen von mindestens einer Dekorschicht (5);
- Auftragen von mindestens einer Harzschutzschicht (6),
- ggf. Auflegen eines Gegenzugpapiers (11) auf die Unterseite der Trägerplatte (1);
- Verpressen des Schichtaufbaus in einer Kurztaktpresse.

15. Verfahren nach Anspruch 14, **gekennzeichnet durch** die weiteren Schritte:
- Auftragen von mindestens einer zweiten Harzschicht (8) auf die mindestens eine Harzschutzschicht (6) auf der Oberseite der Trägerplatte und ggfs. paralleles Auftragen einer Harzschicht auf die Unterseite der Trägerplatte als Gegenzug (11a);
- Aufstreuen von mindestens einer Lage aus abriebfesten Partikeln (9) auf die Oberseite der Trägerplatte (1);
- Auftragen von mindestens einer Lage einer weiteren Harzschicht (10) auf die Lage aus abriebfesten Partikeln (9) auf der Oberseite der Trägerplatte und ggfs. paralleles Auftragen einer Lage einer weiteren Harzschicht auf die Unterseite der Trägerplatte als Gegenzug (11b),
- ggf. Auflegen eines Gegenzugpapiers (11) auf die Unterseite der Trägerplatte (1); und
- Verpressen des Schichtaufbaus.

## Claims

1. A wood-based panel having antistatic properties comprising at least one carrier board (1) and at least one resin layer (2) disposed on at least one side of the carrier board,
**characterized in that**
the at least one resin layer (2) comprises
- carbon-based particles, especially carbon nanotubes (CNTs) or graphene,
- at least one compound having the general formula (Ia)
**R¹ₐ SiX₍₄₋ₐ₎** **(Ia),**
where
- X is H, OH or a hydrolyzable moiety selected from the group comprising halogen, alkoxy, carboxy, amino, monoalkylamino or dialkylamino, aryloxy, acyloxy, alkylcarbonyl,
- R¹ is an organic moiety selected from the group comprising alkyl, aryl, cycloalkyl, which may be interrupted by -O- or -NH-,
- wherein R¹ has at least one functional group Q¹ selected from a group containing a hydroxy, amino, monoalkylamino, carboxy, mercapto, alkoxy, aldehyde, acrylic, acryloxy, methacrylic, methacryloxy, cyano, isocyano and epoxy group,
- a 1 or 2, and
- at least one further compound of the general formula (II)
**R³_{c} SiX_{(4-c)}** **(II),**
where
- X has the above meaning,
- R³ is a non-hydrolyzable organic moiety R³ selected from the group consisting of alkyl, aryl, alkenyl, alkynyl, cycloalkyl, cycloalkenyl, and
- c 1, 2, 3, or 4, in particular 1, 2, or 3.

2. Wood-based panel according to claim 1, **characterized in that** a compound of the general formula (Ia) and a compound of the general formula (II) are used in each case.

3. Wood-based panel according to claim 2, **characterized in that** the molar ratio of the silane compound of formula (Ia) to the silane compound of formula (II) is between 1 : 0.5 and 1 : 2, preferably between 1 : 1 and 1 : 1.5.

4. Wood-based panel according to one of the preceding claims, **characterized in that** X is selected from a group comprising H, OH, fluorine, chlorine, bromine, iodine, C₁₋₆ - alkoxy, in particular methoxy, ethoxy, n-propoxy and butoxy, C₆₋₁₀ -aryloxy, in particular phenoxy, C₂₋₇ -acyloxy, in particular acetoxy or propionoxy, C₂₋₇ -alkylcarbonyl, in particular acetyl, monoalkylamino or dialkylamino with C₁ to C₁₂, in particular C₁ to C₆.

5. Wood-based panel according to one of the preceding claims, **characterized in that** R¹ is selected from a group comprising C₁ -C₃₀ -alkyl, in particular C₅ -C₂₅ -alkyl, C₂ -C₆ - alkenyl, C₃ -C₈-cycloalkyl and C₃ -C₈ -cycloalkenyl.

6. Wood-based panel according to one of the preceding claims, **characterized in that** the at least one functional group Q¹ is selected from a group comprising epoxy, hydroxy, acrylic, acryloxy, methacrylic, methacryloxy, amino, alkoxy, cyano and/or isocyano group.

7. Wood-based panel according to one of the preceding claims, **characterized in that** the non-hydrolyzable organic moiety R³ is selected from a group comprising C₁ -C₁₅ -alkyl, in particular C₁ -C₁₀ -alkyl, C₂ -C₆ -alkenyl, C₂ - C₆ -alkynyl and C₆ -C₁₀ -aryl.

8. Wood-based panel according to one of the preceding claims, **characterized in that** at least one layer of a color base coat (3) is provided on the at least one resin layer (2) containing carbon-based particles.

9. Wood-based panel according to claim 8, **characterized in that** at least one primer layer (4) is provided on the at least one resin layer (2) and the at least one color base coat layer (3).

10. Wood-based panel according to one of the preceding claims, **characterized by** at least one decorative layer (5).

11. Wood-based panel according to claim 10, **characterized by** at least one resin protective layer (6) provided on the decorative layer (5).

12. Wood-based panel according to claim 11, **characterized in that** a second resin layer (8) is applied to the resin protective layer (6).

13. Wood-based panel according to claim 12, **characterized in that** at least one layer of abrasion-resistant particles (9) is introduced onto the second resin layer (8) on the upper side of the wood-based panel, and preferably at least one layer of a further resin layer (10) is provided on the layer of abrasion-resistant particles (9).

14. A method of producing a wood-based panel according to one of the preceding claims, comprising the steps of:
- Providing a resin suspension comprising carbon-based particles, at least one compound of the general formula (Ia) and at least one compound of the general formula (II) ;
- Applying the resin suspension as a resin layer (2) on the upper side of the carrier board (1);
- Applying at least one layer of a color base coat layer (3);
- Applying at least one layer of a primer (4);
- Applying at least one decorative layer (5);
- Applying at least one protective resin layer (6),
- optionally, placing a backing paper (11) on the underside of the carrier board (1);
- Pressing of the layer structure in a short-cycle press.

15. Method according to claim 14, **characterized by** the further steps:
- Applying at least one second resin layer (8) to the at least one resin protective layer (6) on the upper side of the carrier board and, optionally, parallel applying a resin layer to the underside of the carrier board as a backing (11a);
- Scattering at least one layer of abrasion-resistant particles (9) on the upper side of the carrier board (1);
- Applying at least one layer of a further resin layer (10) to the layer of abrasion-resistant particles (9) on the upper side of the carrier board and, optionally, parallel applying a layer of a further resin layer to the underside of the carrier board as a backing (11b),
- optionally, placing a backing paper (11) on the underside of the carrier board (1); and
- pressing the layer structure.

## Revendications

1. Panneau en matériau dérivé du bois présentant des propriétés antistatiques, comprenant au moins un panneau de support (1) et au moins une couche de résine (2) disposée sur au moins une face du panneau de support,
**caractérisé en ce que**
l'au moins une couche de résine (2) comprend
- des particules à base de carbone, en particulier des nanotubes en carbone (CNT) ou du graphène,
- au moins un composé avec la formule générale (la)
**R¹ₐSiX₍₄₋ₐ₎** **(Ia),**
dans lequel
- X est H, OH ou un radical hydrolysable choisi parmi le groupe comprenant de l'halogène, de l'alcoxy, du carboxy, de l'amino, du monoalkylamino ou du dialkylamino, de l'aryloxy, de l'acyloxy, de l'alkylcarbonyle,
- R¹ est un radical organique choisi parmi le groupe comprenant de l'alkyle, de l'aryle, du cycloalkyle, qui peuvent être interrompus par -O- ou -NH-,
- dans lequel R¹ présente au moins un groupe fonctionnel Q¹, qui est choisi parmi un groupe contenant un groupe hydroxy, un groupe amino, un groupe monoalkylamino, un groupe carboxy, un groupe mercapto, un groupe alcoxy, un groupe aldéhyde, un groupe acrylique, un groupe acryloxy, un groupe méthacrylique, un groupe méthacryloxy, un groupe cyano, un groupe isocyano et un groupe époxyde,
- a est = 1 ou 2, et
- au moins un autre composé de la formule générale (II)
**R³_{c}SiX_{(4-c)}** **(II),**
dans lequel
- X présente la signification ci-avant,
- R³ est un radical organique non hydrolysable R³, qui est choisi parmi le groupe comprenant l'alkyle, l'aryle, l'alcényle, l'alcynyle, le cycloalkyle, le cycloalcényle, et
- c est = 1, 2, 3 ou 4, en particulier est 1, 2 ou 3.

2. Panneau en matériau dérivé du bois selon la revendication 1, **caractérisé en ce que** respectivement un composé de la formule générale (la) et un composé de la formule générale (II) sont utilisés.

3. Panneau en matériau dérivé du bois selon la revendication 2, **caractérisé en ce que** le rapport molaire du composé de silane de la formule (la) par rapport au composé de silane de la formule (II) est compris entre 1:0,5 et 1:2, de manière préférée entre 1:1 et 1:1,5.

4. Panneau en matériau dérivé du bois selon l'une quelconque des revendications précédentes, **caractérisé en ce que** X est choisi parmi un groupe contenant de l'H, de l'OH, du fluor, du chlore, du brome, de l'iode, de l'alcoxy en C₁-C₆, en particulier du méthoxy, de l'éthoxy, du n-propoxy et du butoxy, de l'aryloxy en C₆-C₁₀, en particulier du phénoxy, de l'acyloxy en C₂-C₇, en particulier de l'acétoxy ou du propionoxy, de l'alkylcarbonyle en C₂-C₇, en particulier de l'acétyle, du monoalkylamino ou du dialkylamino avec C₁ à C₁₂, en particulier C₁ à C₆.

5. Panneau en matériau dérivé du bois selon l'une quelconque des revendications précédentes, **caractérisé en ce que** R¹ est choisi parmi un groupe comprenant de l'alkyle en C₁-C₃₀, en particulier de l'alkyle en C₅-C₂₅, de l'alcényle en C₂-C₆, du cycloalkyle en C₃-C₈ et du cycloalcényle en C₃-C₈.

6. Panneau en matériau dérivé du bois selon l'une quelconque des revendications précédentes, **caractérisé en ce que** l'au moins un groupe fonctionnel Q¹ est choisi parmi un groupe contenant un groupe époxyde, un groupe hydroxy, un groupe acrylique, un groupe acryloxy, un groupe méthacrylique, un groupe méthacryloxy, un groupe amino, un groupe alcoxy, un groupe cyano et/ou un groupe isocyano.

7. Panneau en matériau dérivé du bois selon l'une quelconque des revendications précédentes, **caractérisé en ce que** le radical organique non hydrolysable R³ est choisi parmi
un groupe comprenant de l'alkyle en C₁-C₁₅, en particulier de l'alkyle en C₁-C₁₀, de l'alcényle en C₂-C₆, de l'alcynyle en C₂-C₆ et de l'aryle en C₆-C₁₀.

8. Panneau en matériau dérivé du bois selon l'une quelconque des revendications précédentes, **caractérisé en ce qu'**au moins une couche d'une base colorée (3) est prévue sur l'au moins une couche de résine (2) contenant des particules à base de carbone.

9. Panneau en matériau dérivé du bois selon la revendication 8,
**caractérisé en ce qu'**au moins une couche d'apprêt (4) est prévue sur l'au moins une couche de résine (2) et l'au moins une couche de base colorée (3).

10. Panneau en matériau dérivé du bois selon l'une quelconque des revendications précédentes, **caractérisé par** au moins une couche décorative (5).

11. Panneau en matériau dérivé du bois selon la revendication 10,
**caractérisé par** au moins une couche de protection de résine (6) prévue sur la couche décorative (5).

12. Panneau en matériau dérivé du bois selon la revendication 11, **caractérisé en ce qu'**une deuxième couche de résine (8) est appliquée sur la couche de protection de résine (6).

13. Panneau en matériau dérivé du bois selon la revendication 12, **caractérisé en ce qu'**au moins une couche de particules résistantes à l'abrasion (9) est introduite sur la deuxième couche de résine (8) sur la face supérieure du panneau en matériau dérivé du bois, et de manière préférée au moins une couche d'une autre couche de résine (10) est prévue sur la couche composée de particules résistantes à l'abrasion (9).

14. Procédé de fabrication d'un panneau en matériau dérivé du bois selon l'une quelconque des revendications précédentes, comprenant les étapes :
- de mise à disposition d'une suspension de résine contenant des particules à base de carbone, au moins un composé de la formule générale (la) et au moins un composé de la formule générale (II) ;
- d'application de la suspension de résine en tant que couche de résine (2) sur la face supérieure du panneau de support (1) ;
- d'application d'au moins une couche d'une couche de base colorée (3) ;
- d'application d'au moins une couche d'apprêt (4) ;
- d'application d'au moins une couche décorative (5) ;
- d'application d'au moins une couche de protection de résine (6),
- de pose éventuelle d'un papier de contretraction (11) sur la face inférieure du panneau de support (1) ;
- de compression de la structure en couches dans une presse à cycle court.

15. Procédé selon la revendication 14, **caractérisé par** les autres étapes :
- d'application d'au moins une deuxième couche de résine (8) sur l'au moins une couche de résine de protection (6) sur la face supérieure du panneau de support et d'application éventuelle en parallèle d'une couche de résine sur la face inférieure du panneau de support en tant que contretraction (11a) ;
- de dispersion d'au moins une couche de particules résistantes à l'abrasion (9) sur la face supérieure du panneau de support (1) ;
- d'application d'au moins une couche d'une autre couche de résine (10) sur la couche composée de particules résistantes à l'abrasion (9) sur la face supérieure du panneau de support et d'application éventuelle en parallèle d'une couche d'une autre couche de résine sur la face inférieure du panneau de support en tant que contretraction (11b),
- de pose éventuelle d'un papier de contretraction (11) sur la face inférieure du panneau de support (1) ; et
- de compression de la structure en couches.
